(19) Europäisches Patentamt / European Patent Office / Office européen des brevets

(11) **EP 3 239 926 A1**

(12) **EUROPEAN PATENT APPLICATION**

(43) Date of publication:
**01.11.2017 Bulletin 2017/44**

(51) Int Cl.:
***G06T 7/00*** (2017.01)

(21) Application number: **16167198.7**

(22) Date of filing: **27.04.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **GE Energy Power Conversion Technology Ltd**
**Rugby**
**Warwickshire CV21 1BU (GB)**

(72) Inventor: **VICENZOTTI, Luca**
**Rugby, Warwickshire CV21 1BU (GB)**

(74) Representative: **Serjeants LLP**
**Dock**
**75 Exploration Drive**
**Leicester, LE4 5NU (GB)**

(54) **POSITION MEASURING EQUIPMENT**

(57) Position measuring equipment (PME) is described that is specifically designed for "marker-less" operation. The PME includes a first optical instrument ($2_L$) for recording a sequence of first digital images ($4_L$) and a second optical instrument ($2_R$) for recording a sequence of second digital images ($4_R$). The first and second optical instruments ($2_L$, $2_R$) are positioned at spaced apart locations relative to a first point in three-dimensional space ($P_0$ (0,0,0)) and orientated to have partially overlapping fields of view. A processor (8) is used to process paired first and second digital images ($4_L$, $4_R$) that are recorded by the first and second optical instruments ($2_L$, $2_R$) at substantially the same time. The processor (8) is adapted to determine a group of matching pairs of features in the first and second digital images ($4_R$, $4_L$), e.g., by applying a feature detection and matching algorithm. A group of matching pairs of features represents a target object or part of the target object. The group of matching pairs of features is used to determine a second point in three-dimensional space corresponding to the target object or the part of the target object. The processor (8) can then determine the distance in three-dimensional space between the first point ($P_0$(0,0,0)) and the second point that corresponds the target object or the part of the target object. Measurements provided by the PME can be used for dynamic positioning if the PME is installed on a marine vessel, for example.

FIG. 2

**Description**

Technical Field

The present invention relates to position measuring equipment (PME) that typically is used to measure the distance between a moving object and a stationary or moving object. The PME is particularly suitable for use with marine vessels, where the measurements provided by the PME can be utilised for dynamic positioning (DP) of marine vessels, i.e., the use of thrusters to maintain the position of a marine vessel in the vicinity of a reference point and stabilise its heading, in opposition to environmental forces such as wind and current. The term 'marine vessel' is intended to include ships, drilling rigs and any other surface-going vessels or platforms.

However, the PME is also suitable for use with other types of vehicle (e.g., land-based vehicles) and also with fixed platforms such as oil and gas rigs where it might be used to measure the distance between the fixed platform and a marine vessel, for example.

The PME uses computer vision (or more particularly, computer stereo vision) techniques to provide position measurements without relying on the use of specific markers such as two-dimensional patterns, retroreflective targets or responders.

Summary of the Invention

The present invention provides position measuring equipment (PME) comprising:

a first optical instrument for recording a sequence of first digital images;
a second optical instrument for recording a sequence of second digital images, wherein the first and second optical instruments are positioned at spaced apart locations relative to a first point in three-dimensional space and orientated to have partially overlapping fields of view; and
a processor for processing paired first and second digital images that are recorded by the first and second optical instruments at substantially the same time;
wherein the processor is adapted to:

determine a group of matching pairs of features, each matching pair of features including a first feature in the first digital image and a matching second feature in the second digital image, wherein the group represents a target object or part of the target object;
use the group of matching pairs of features to determine a second point in three-dimensional space corresponding to the target object or the part of the target object; and
determine the distance in three-dimensional space between the first and second points.

The PME will determine a sequence of distances (or distance measurements) between the first and second points by processing successive paired first and second digital images as recorded by the first and second optical instruments. The distance measurements provided by the PME can utilised in variety of different ways, including by external equipment or processors.

The optical instruments can be video cameras mounted to a host object. The host object can be a moving object (e.g., a marine vessel or land-based vehicle) or a stationary object (e.g., a fixed platform such as an oil or gas rig). In the case of a marine vessel, for example, the optical instruments can be mounted to any suitable structure on the bow, stern or side of the marine vessel and can be orientated in any suitable direction relative to the marine vessel as long as the optical instruments have partially overlapping fields of view. As used herein, the term "field of view" is intended to be the area which is visible through an optical instrument. A target object or part of a target object that is within the overlapping field of view of the first and second optical instruments will appear in both the first and second digital images.

The distance between the spaced apart locations at which the optical instruments are positioned is called the baseline. The most accurate measurements will typically be determined by the PME when the target object is separated from the optical instruments by a distance of about 10x the baseline. Typically, the baseline might be about 5 to 10 metres so that the best operating distance for the PME will be between about 50 and about 100 metres. Beyond the best operating distance, as the distance to the target object increases, the error percentage of the measurements provided by the PME will increase. But in practice, accurate measurements will often be necessary only when the target object is relatively close and higher error percentages for more distant target objects can be acceptable.

The first point used to determine the distance measurements will normally be fixed in three-dimensional space relative to the host object. Any suitable point can be selected as the first point. For example, it can be the location of one of the optical instruments or, in the case where the host object is a marine vessel, the centre of gravity of the marine vessel because this would typically be used as a reference point for other PME. The spatial relationship between the first point and the spaced apart locations where the first and second optical instruments are positioned is known for the particular PME configuration.

The target object can be a moving object (e.g., a marine vessel or land-based vehicle) or a stationary object (e.g., a fixed platform such as an oil and gas rig) that is within the overlapping field of view of the first and second optical instruments and hence appears in the first and second digital images.

It will be readily appreciated that at least one of the host object and the target object is normally a moving object. Often, both the host object and the target object will be moving objects, e.g., both are marine vessels where it is important to determine the relative distance between them.

PME according to the present invention is specifically designed to be "marker-less". In other words, the processor can use any visual features that can be detected in the first and second digital images and the PME does not rely on the use of specific markers such as two-dimensional patterns, retro-reflective targets or responders. Such markers have to be placed at certain fixed locations in order for existing PME to provide measurement information. Examples of existing PME include the RadaScan® and CyScan® local position reference sensors for marine dynamic positioning (DP) applications. These PME provided by Guidance Marine Ltd of 5 Tiber Way, Meridian Business Park, Leicester, United Kingdom and utilise intelligent microwave targets (called responders) and retro-reflective targets, respectively. In contrast to existing PME, the PME according to the present invention is capable of being used in a wide range of situations where no markers are present.

The processor can be implemented using any suitable processing equipment. The processor can include a display and user-operable controls to enable a user to carry out control actions described in more detail below.

The present invention further provides a method of position measuring comprising the steps of:

> obtaining a sequence of first digital images using a first optical instrument;
>
> obtaining a sequence of second digital images using a second optical instrument, the first and second optical instruments being positioned at spaced apart locations relative to a first point in three-dimensional space and orientated to have partially overlapping fields of view;
>
> processing paired first and second digital images that are recorded by the first and second optical instruments at substantially the same time to:
>
>> determine a group of matching pairs of features, each matching pair of features including a first feature in the first digital image and a matching second feature in the second digital image, wherein the group represents a target object or part of the target object;
>>
>> use the group of matching pairs of features to determine a second point in three-dimensional space corresponding to the target object or the part of the target object; and
>>
>> determine the distance in three-dimensional space between the first and second points.

Matching pairs of features can be detected using a feature detection and matching algorithm (or process). Such a feature detection and matching algorithm can be used to detect one or more features or visually "interesting" parts in the paired first and second digital images. Each feature can be defined by a group of pixels of the digital image. Each feature can be given a "descriptor" which allows features in the paired first and second digital images to be compared to see if they match features. Different feature detection and matching algorithms rely on different "descriptors" but they are usually determined by analysing the visual properties of a pixel group. Once features in the paired first and second digital images have been identified, they can be compared or matched to detect matching pairs of features. It will be understood that each matching pair of features will include a first feature (or pixel group) in the first digital image and a second feature (or pixel group) in the second digital image, and that the first and second features will be substantially identical or have substantially the same "descriptors".

Only features representing a target object or part of a target object within the overlapping field of view of the first and second optical instruments can be matched by the feature detection and matching algorithm. Types of visual features that can be detected by the feature detection and matching algorithm include edges, corners, blobs or other interest points. Any suitable feature detection and matching algorithm (or process) can be used, and examples might include *inter alia* Scale-Invariant Feature Transform (SIFT), Speeded Up Robust Features (SURF), Oriented FAST and Rotated BRIEF (ORB).

The paired first and second digital images can optionally be pre-processed or smoothed before the feature detection and matching algorithm is applied.

Once matching pairs of features have been detected, they can be grouped by the processor (e.g., using a grouping algorithm or process) or by a user. For example, an image can be shown to the user on the display and the user can use the user-operable controls to select (or "crop") part of the image that contains the target object or the part of the target object and any matching pairs of features within this selected part of the image will be grouped together.

The matching pairs of features detected by the feature detection and matching algorithm can sometimes be grouped into two or more groups. In the case where the grouping is carried out by the processor (e.g., using a grouping algorithm) it should preferably be done in a robust manner such that the processor is confident that matching pairs of features can be grouped together correctly, i.e., that they are representative of the same target object or part of the target object. If grouping is carried out by a user, the user can select (or "crop") two or more parts of the image in turn and any matching pairs of features within each selected part of the image can be grouped together.

If two or more groups are detected, the processor can determine a second point in three-dimensional space for each group and hence determine the distance in three-dimensional space between the first point and each of the second points. The PME can provide distance measurements to two or more target objects, or to two or more parts of the same target object. In some situations, even if the matching pairs of features can be grouped into two or more groups by the processor, it might be preferable for only one group to be used so that the distance to only one target object or one part of a target object is provided at any time. In a more general case, if there are a total of x groups, *y* groups can be selected by the processor or the user, where *y<x*. For example, while multiple groups might be "tracked" for information or monitoring purposes, it might be that only one group is selected for the purpose of position measurement so that the distance to one target object or one part of a target object represented by the selected group is supplied to a DP system. The processor or user might therefore be able to distinguish between one or more groups that are selected for information or monitoring purposes and one or more groups that are selected for position measurement. The selection of one group from two or more groups (or *y* groups from x groups) can be carried out by the processor or by a user. For example, the processor might be capable of ranking the groups or selecting or prioritising one or more groups on the basis of any suitable criteria. Once matching pairs of features have been grouped, it might be possible to identify or classify each group. Identifying or classifying each group might be useful for any prioritising or ranking process. For example, although the present invention is designed to be "marker-less", it might be possible to identify a group of matching pairs of features as a marker (e.g., by comparing the features against known types of visual pattern) and to automatically select that group specifically because it is a marker and therefore by default is considered to be part of the target object from which distance measurements are particularly useful or advantageous. Types of visual pattern that might be identified include *inter alia* ArUco markers (i.e., square fiducial markers), QR codes or barcodes. Markers can be detected by a marker detection algorithm (or process) that does not rely on feature matching. The marker detection algorithm can detect a marker in the paired first and second digital images (e.g., by detecting a particular visual pattern) and determine one or more pairs of features, each pair of features including a first feature in the first digital image and second feature in the second digital image that represents the marker. The first and second features can be the centre of the marker or a corner of the marker, for example. The pair of features can be used to determine the second point in three-dimensional as described herein. The feature detection and matching algorithm and the marker detection algorithm can be applied simultaneously or sequentially. It should be noted that any reference below to when or how the feature detection and matching algorithm is applied (e.g., to only a subset of the first and second digital images) will also apply *mutatis mutandis* to the application of the marker detection algorithm.

If the selection is carried out by a user, an image can be shown to the user on the display where the groups are highlighted and the user can use the user-operable controls to select one or more desired groups from those highlighted.

Each group of matching pairs of features can be "tracked" through successive paired first and second digital images. This can include groups which are not selected by the processor or the user for the purposes of position measurement. A quality factor for the tracking can be determined. If the quality factor falls below a threshold, i.e., if the processor is no longer confident that a previously selected group is being properly tracked for any reason, the user can be prompted to select one or more highlighted groups from a displayed image or to select (or "crop") one or more parts of the image for subsequent processing by the feature detection and matching algorithm. This would happen if a previously selected group of matching pairs of features is no longer visible in the first and second digital images, or if it changes significantly, for example. The quality factor might be determined by the number of matching pairs of features in a particular group and the quality of matching between those features.

The feature detection and matching algorithm can optionally be applied only to a subset of the paired first and second digital images. In other words, the feature detection and matching algorithm does not always need to be applied to all of the pixels of the paired first and second digital images, just to some of them. This can reduce the need to apply the feature detection and matching algorithm to parts of the first and second digital images where features do not need to be detected. Applying the feature detection and matching algorithm to a selected subset of the paired first and second digital images reduces computational requirements, and can filter out unwanted target objects.

The subset can be selected by a pre-processing algorithm (or process). For example, a pre-processing algorithm might select a particular area or deliberately exclude a particular area. Particular areas can be selected or excluded by performing some sort of image segmentation or classification which might be used to classify which part of the first and second digital images is ocean or sky, or if the images include a horizon line, for example. Alternatively, the subset can be selected by the user. For example, an image can be shown to the user on the display and the user can use the user-operable controls to select (or "crop") the part of the digital image to which the feature detection and matching algorithm will be applied subsequently. In practice, this can remove the need for the matching pairs of features to be grouped by the user after they have been detected because any matching pairs of features detected by the detection and matching algorithm in the selected part of the image can be grouped into a single group. A useful example of pre-processing is where the first and second optical instruments have a portion of the host object in their respective field of view. This portion of the host object will appear in each of the successive first and second digital images and is irrelevant for the purposes of feature detection and matching. The part of each digital image that includes the portion of the host object can therefore be specifically excluded (e.g., during commissioning or by the user) so that the detection and matching algorithm is not applied to it.

Each second point in three-dimensional space can be determined using a position determining algorithm (or process).

The position determining algorithm can determine a point in three-dimensional space that corresponds to each matching pair of features. These points are referred to herein as "feature points". Since each group includes a plurality of matching pairs of features, and each group corresponds to the target object or part of the target object, it therefore follows that each target object or part of the target object is defined by a plurality of feature points in three-dimensional space. The second point in three-dimensional space that corresponds to the target object or part of the target object can be determined from the individual feature points. For example, the second point can be an average of the feature points for the group or the result of a minimum mean square error estimation using the feature points for the group. It will be readily understood that this involves averaging or processing in the three-dimensional reference frame, which is likely to be more accurate. But it is also possible to carry out averaging or processing in the two-dimensional reference frame. For example, a first location in the first digital image (i.e., in the two-dimensional reference frame) can be an average of the first features for the group or the result of a minimum mean square error estimation process using the first features for the group, and a second location in the second digital image can be an average of the second features for the group or the result of a minimum mean square error estimate process using the second features for the group. The second point can then be determined using the first and second locations. This is a similar process to the marker detection where the first and second locations correspond to the pair of features in the first and second digital images that represent part of the marker.

For averaging in the three-dimensional reference frame, if a group representing a target object *includes n* matching pairs of features, where $n \geq 2$, that *is n* first features in the first digital image and *n* second features in the second digital image that are substantially identical and grouped together, the position determining algorithm will determine n corresponding feature points in three-dimensional space, each feature point representing the physical location of the particular feature in the two-dimensional digital image. The n feature points are then used to determine a single second point for position measurement purposes.

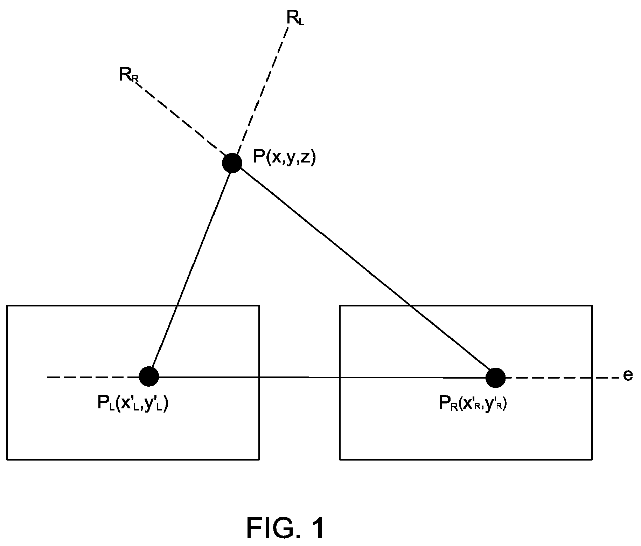

Each feature point can be determined by the position determining algorithm using a three-dimensional reconstruction process that is described with reference to Figure 1. The same three-dimensional reconstruction process can be used to determine the second point directly using a pair of features that represent a marker, or the first and second locations in the first and second digital images if the averaging or processing is carried out in the two-dimensional reference frame as mentioned above.

Figure 1 shows first and second digital images where:

$P(x,y,z)$ is a feature point in a three-dimensional (or "real world") reference frame,
$p_i(x'_i,y'_i)$ is the position of a feature or a location in a two-dimensional (or "image") reference frame, where i=L or R indicates the first (or left) digital image or the second (or right) digital image, respectively,
$e$ is an epipolar constraint line, and
$R_i$ is an inverse projecting ray.

The origin of the three-dimensional reference frame and its orientation is arbitrary. But it is often convenient if the origin corresponds with the first point in three-dimensional space. As noted above, if the host object is a marine vessel, the first point, and hence the origin of the three-dimensional reference frame, can be the centre of gravity of the marine vessel.

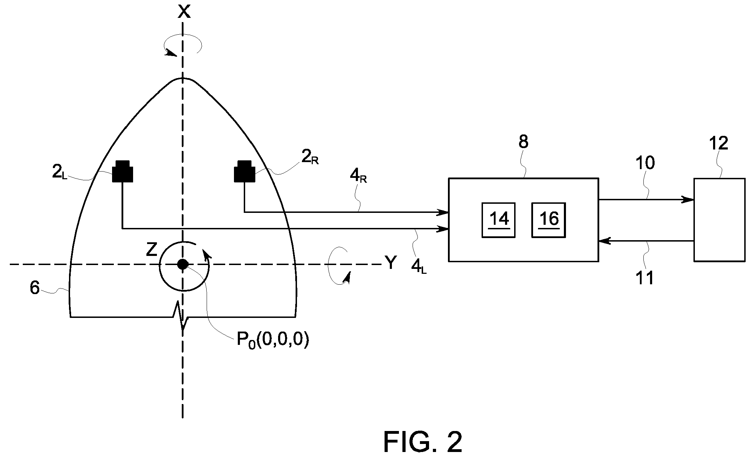

The axes of the three-dimensional reference frame can also be orientated with respect to the axes of the host object. If the host object is a marine vessel or other moving object, the axes can be the perpendicular X, Y and Z axes shown in Figure 2. In particular, in the context of a marine vessel, the X axis (or longitudinal axis) is the axis running horizontally through the length of the marine vessel, through its centre of gravity, and parallel to the waterline; the Y axis (or lateral axis) is the axis running horizontally across the marine vessel and through the centre of gravity; and the Z axis (or vertical axis) is the axis running vertically through the marine vessel and through its centre of gravity. The translational movements of a marine vessel along the X, Y and Z axes are normally referred to as surge, sway and heave, respectively. The rotational movements of a marine vessel about the X, Y and Z axes are normally referred to as roll, pitch and yaw, respectively.

If the centre of gravity of the marine vessel is at the origin of the three-dimensional reference frame, the position determining algorithm will provide the distance between the centre of gravity and the second point. The processor can optionally be adapted to also determine relative bearing, i.e., the angle between the heading of the marine vessel and a straight line between the first and second points.

The distance and/or relative bearing measurements provided by the PME can be utilised by the DP system for the marine vessel. The object of a DP system is not to hold the vessel absolutely stationary, but to maintain its station within acceptable limits. The magnitude of the permitted position variation is dependent upon the application and on operational concerns. It will be readily appreciated that the distance and/or relative bearing measurements provided by the PME can be utilised for any other purposes, e.g., for tracking or monitoring the target object relative to the host object.

For a first point that moves in three-dimensional space, e.g., where the host object is a moving object such as a marine vessel, the processor can optionally use information relating to the orientation of the moving object. This orientation information (which is sometimes referred to as "attitude data") relates to the rotational movement of the moving object about one or more of the X, Y and Z axes (e.g., pitch, yaw and roll). The orientation information can, for example, be provided by the DP system of the marine vessel or by any other on-board sensors.

If the three-dimensional reference frame is locked to the axes of the marine vessel or other moving object, it means that the orientation of the three-dimensional reference frame will change with respect to the earth in response to changes in the orientation of the marine vessel or other moving object. This can be problematic if the orientation of the marine vessel or other moving object changes significantly, e.g., during moderate or rough sea states, and can affect the accuracy of the distance and/or relative bearing measurements provided by the PME. The orientation information can therefore be used by the processor to at least partially decouple the orientation of the three-dimensional reference frame from the axes of the marine vessel or other moving object, i.e., to try and lock the three-dimensional reference frame more closely to the earth and hence improve the accuracy of the distance and/or relative bearing measurements provided by the PME. In the specific case of a marine vessel, pitch and roll movements can be particularly significant and the orientation information can be used to provide pitch and roll correction.

The position determining algorithm typically requires the first and second optical instruments to undergo a calibration process. Such a calibration process is well-known in the field of computer vision and will normally only be performed once during the installation and commissioning of the PME. Computer vision modules often includes calibration software that can be used for this purpose.

The calibration process can determine the following parameters:

- extrinsic parameters such as optical centre, optical axis and image coordinate axis, and
- intrinsic parameters such as focal distance, principal point and optical distortions.

The extrinsic parameters can be used to construct a projection matrix, which provides a mathematical relationship for the mapping of any given point in the three-dimensional reference frame (i.e., the feature point represented by $P(x, y, z)$) to a point in the digital image recorded by the optical instrument (i.e., the point in the two-dimensional reference frame represented by

$$p_i(x_i', y_i')).$$

The intrinsic parameters can be used to construct a distortion matrix (or intrinsic matrix), which describes the intrinsic manufacturing imperfections of the particular optical instrument as opposed to the ideal. The distortion matrix is used to correct for the imperfections or defects so that the pixels in the digital images generated by the optical instrument match the mathematical relationship provided by the projection matrix.

In the case of stereo calibration (i.e., where there are two or more optical instruments) the following additional parameters can be determined:

- rotational and translational matrices, which describe the position and orientation of the first and second optical instruments relative to each other, and
- a fundamental matrix, which relates corresponding points in two or more digital images through the use of epipolar geometry.

The fundamental matrix can be used to simplify the process of matching detected features because it constrains matching features to be positioned on known lines. In other words, for any given feature in a first digital image, a matching feature in a second digital image that corresponds to the same point in a three-dimensional reference frame must lie on a known line whose description is given by the fundamental matrix (i.e., the line $e$ in Figure 1). In the simple case of two optical instruments orientated in parallel, these lines are horizontal within the digital image. But the fundamental matrix describes these lines in a general case where the optical instruments have any particular orientation relative to each other.

It will be understood that the various matrices and procedures mentioned above are well known in the field of computer vision and for additional background information the reader can refer, for example, to "Multiple View Geometry in Computer Vision" by Richard Hartley and Andrew Zisserman (Cambridge University Press, 2004).

Once the parameters have been determined by the calibration process, it is possible to uniquely map each point in the three-dimensional reference frame to a point in the digital images provided by each optical instrument. But it will be readily appreciated that the position determining algorithm of the present invention effectively reconstructs feature points in the three-dimensional reference frame (i.e., in the real world) that correspond to matched features in the paired first and second digital images. When mapping from the three-dimensional reference frame to the two-dimensional reference frame, the projection matrix describes an univocal relationship. But this is not the case when mapping from the two-dimensional reference frame to the three-dimensional reference frame. When the relationship given by the projection matrix is inverted, the result is an inverse projecting ray (e.g., $R_L$ for the first digital image) that describes the range of candidate points in the three-dimensional reference frame that are mapped to the same point in the two-dimensional reference frame. In other words, an infinite number of points in the three-dimensional reference frame can be mapped to the same point in the two-dimensional reference frame with the uncertainty being the distance of the target object or part of the target object from the optical instrument, which distance could range from zero to infinity.

This ambiguity is resolved by the use of paired first and second digital images. This allows a pair of inverse projecting rays (e.g., $R_L$ and $R_R$) to be determined. The first inverse projecting ray describes a first range of candidate points in the three-dimensional reference frame for a feature in the first digital image and the second inverse projecting ray describes a second range of candidate point in the three-dimensional reference frame for a feature in the second digital image, the features being matching features detected by the feature detection and matching algorithm. The feature point $P(x,y,z)$ corresponding to the matching features is where the first and second inverse projecting rays $R_L$, $R_R$ intersect as shown in Figure 1.

Drawings

Figure 1 is a schematic representation of a three-dimensional reconstruction process;

Figure 2 is a schematic representation of position measuring equipment (PME) according to the present invention;

Figure 3 is a schematic representation of the overlapping fields of view of video cameras of the PME of Figure 2;

Figure 4 is a schematic representation of the digital images recorded by the video cameras of the PME of Figure 2;

Figures 5A, 5B and 5C are schematic representations of processing during a first position measurement scenario;

Figures 6A, 6B and 6C are schematic representations of processing during a second position measurement scenario;

Figure 7A, 7B and 7C are schematic representations of processing during a third position measurement scenario;

Figure 8 is a flow diagram summarising the processing during the first, second and third position measurement scenarios;

Figures 9A, 9B and 9C are schematic representations of processing during a fourth position measurement scenario where a marker is detected;

Figure 10 is a flow diagram summarising the processing during the fourth position measurement scenario; and

Figure 11 is a flow diagram summarising the method of position measuring according to the present invention.

Figure 2 shows position measuring equipment (PME) according to the present invention. The PME includes a first video camera $2_L$ for recording a sequence of first digital images $4_L$ and a second video camera $2_R$ for recording a sequence of second digital images $4_R$. The first video camera $2_L$ is mounted to the bow of a platform supply vessel 6 on the port (or left-hand) side and the second video camera $2_R$ is mounted to the bow of the platform supply vessel on the starboard (or right-hand) side. The platform supply vessel 6 is the host object.

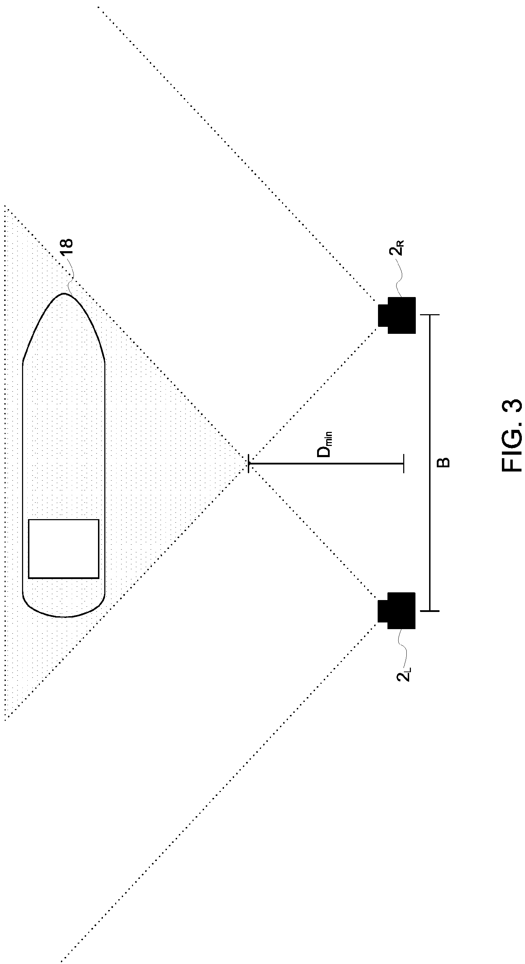

With reference to Figure 3, the distance between the spaced apart locations at which the first and second video cameras $2_L$, $2_R$ are positioned is called the baseline B. The first and second video cameras $2_L$, $2_R$ have overlapping fields of view (the overlapping area is shaded in Figure 3 for emphasis) and the minimum measurable distance is indicated by $D_{min}$. Also shown in Figure 3 is a drillship 18 which is the target object.

The first and second video cameras $2_L$, $2_R$ are positioned relative to a first point in three-dimensional space $P_0(x,y,z)$ which is the origin of a three-dimensional (or "real world") reference frame. The first point is the centre of gravity of the platform supply vessel 6 because this is used for other PME installed on the platform supply vessel. The three-dimensional reference frame is orientated relative to the perpendicular axes X, Y and Z of the platform supply ship 6 shown in Figure 2.

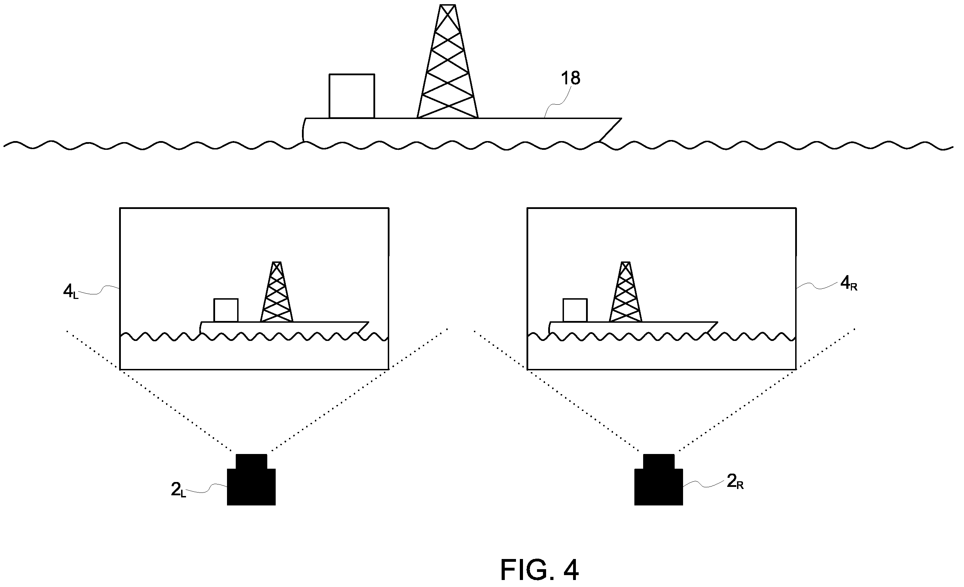

The successive first and second digital images $4_L$, $4_R$ are provided to a processor 8. The processor 8 is adapted to process paired first and second digital images, i.e., images that are recorded by the first and second video cameras $2_L$, $2_R$ at substantially the same time. Figure 4 shows paired first and second digital images $4_L$, $4_R$ of the drillship 18 as it would be seen from the platform supply vessel 6.

The processor 8 provides distance and/or relative bearing measurements 10 to a dynamic positioning (DP) system 12 for the platform supply vessel 6. In other words, the processer 8 processes the first and second digital images $4_L$, $4_R$ to determine the distance and/or relative bearing between the first point $P_0(x,y,z)$ and a second point at the drillship 18 and provides the measurements to the DP system 12. The DP system 12 will normally receive additional position measurements from other PME (not shown). The DP system 12 can also optionally also provide to the processor 8 orientation information (or "attitude data") 11 that relates to the rotational movement of the platform supply vessel 6 about one or more of the three perpendicular axes X, Y and Z shown in Figure 2 (e.g., pitch, yaw and roll) and can be used for pitch and roll correction to improve the accuracy of the distance and/or relative bearing measurements provided by the PME.

The processor 8 can process the first and second digital images $4_L$, $4_R$ using one or more of a pre-processing algorithm, a feature detection and matching algorithm, a marker detection algorithm, a grouping algorithm, and a position detection algorithm.

The processor 8 includes a display unit 14 on which images can be displayed to a user, and user-operable controls 16.

The first and second video cameras $2_L$, $2_R$ are calibrated to determine the various extrinsic and intrinsic parameters necessary to construct the projection matrix, the distortion matrix, the rotational and translational matrices, and the fundamental matrix described above. The calibration can take place when the PME is installed and commissioned, for example.

The operation of the PME will be explained below with reference to four scenarios as the platform supply vessel 6 approaches the drillship 18.

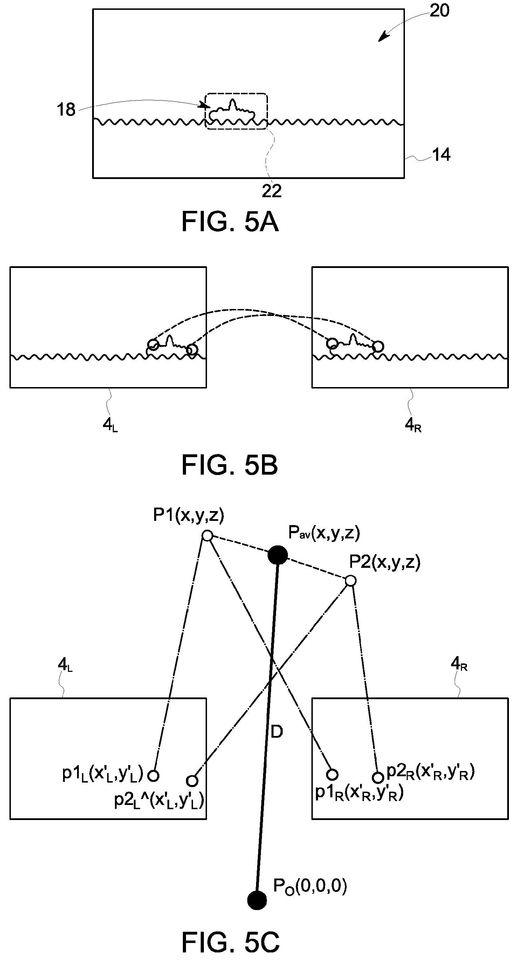

Figures 5A, 5B and 5C represent a first scenario where the platform supply vessel 6 and the drillship 18 are a significant distance apart. The drillship 18 will appear as a fairly indistinct "blob" in the first and second digital images $4_L$, $4_R$ shown in Figure 5B.

As a preliminary pre-processing step shown in Figure 5A, an image 20 from one of the first and second video cameras $2_L$, $2_R$ is displayed to a user on the display unit 14. The image 20 can be a static image. Using the user-operable controls 16 (e.g., a mouse or touchscreen) the user can select (or "crop") part of the image 20. The part of the image 20 to be selected can be identified by a boundary 22 the position and size of which can be controlled by the user. As shown in Figure 5A, the user has selected only the part of the image 20 that includes the indistinct "blob".

Once the part of the image 20 has been selected, the processor 8 will apply a feature detection and matching algorithm to a subset of the paired first and second digital images $4_L$, $4_R$ provided by the video cameras $2_L$, $2_R$. The subset will correspond in position and size to the selected part of the image 20. In other words, the feature detection and matching algorithm is not applied to all of the pixels of the paired first and second digital images, just to some of them. This reduces the need to apply the feature detection and matching algorithm to parts of the first and second digital images where features do not need to be detected.

When the paired first and second digital images $4_L$, $4_R$ are processed, the feature detection and matching algorithm will detect a plurality of first features in the first digital image that represent the "blob" and a plurality of second features in the second digital image that represent the "blob". The feature detection and matching algorithm detects one or more features or visually "interesting" parts of the paired first and second digital images. Once features in the paired first and second digital images have been identified, they can be compared or matched to detect matching pairs of features. It will be readily appreciated that only matching pairs of features have been identified in Figure 5B where they are indicated by the round circles. The feature detection and matching algorithm may have detected other features in one of the digital images, but not found a corresponding or matching feature in the other digital image. Such non-matching features have been omitted for clarity. Each matching pair of features is indicated in Figure 5B by a dashed connecting line.

Any suitable feature detection and matching algorithm can be used, and examples might include *inter alia* Scale-Invariant Feature Transform (SIFT), Speeded Up Robust Features (SURF), Oriented FAST and Rotated BRIEF (ORB). The process of matching detected features can use the fundamental matrix determined during the calibration of the PME.

In Figure 5C, the first features in the first digital image $4_L$ are identified as $p1_L(x'_L, y'_L)$ and $p2_L(x'_L, y'_L)$ and the second features in the second digital image $4_R$ are identified as $p1_R(x'_R, y'_R)$ and $p2_R(x'_R, y'_R)$. A first matching pair of features comprises $p1_L(x'_L, y'_L)$ and $p1_R(x'_R, y'_R)$ and a second matching pair of features comprises $p2_L(x'_L, y'_L)$ and $p2_R(x'_R, y'_R)$. Each feature is identified in the two-dimensional (or "image") reference frame by coordinates $x'_i$ and $y'_i$ defined with reference to an origin.

The matching pairs of features are grouped into a single group. In this case, the grouping is carried out on the basis that any matching pairs of features detected within the previously selected subset of the first and second digital images $4_L$, $4_R$ are grouped together. So the group includes the features $p1_L(x'_L, y'_L)$, $p2_L(x'_L, y'_L)$, $p1_R(x'_R, y'_R)$ and $p2_R(x'_R, y'_R)$ which together represent the whole of the drillship 18 because it is still a significant distance away from the platform supply vessel 6.

The processor 8 uses a position determining algorithm to determine a feature point in three-dimensional space that corresponds to each matching pair of features. In particular, the position determining algorithm uses the first matching pair of features $p1_L(x'_L, y'_L)$ and $p1_R(x'_R, y'_R)$ to determine a first feature point $P1(x,y,z)$ and the second matching pair of features $p2_L(x'_L, y'_L)$ and $p2_R(x'_R, y'_R)$ to determine a second feature point $P2(x,y,z)$ by applying a three-dimensional reconstruction process. The three-dimensional reconstruction process is described above with reference to Figure 1 and maps from the two-dimensional reference frame to the three-dimensional reference frame using the various matrices and the inverse projecting rays that are indicated in Figure 5C by dashed lines and which intersect at the first and second feature points. The first and second feature points $P1(x,y,z)$ and $P2(x,y,z)$ are located in the three-dimensional (or "real world") reference frame and are identified by coordinates $x$, $y$, and $z$ defined with reference to the origin. The first and second feature points $P1(x,y,z)$ and $P2(x,y,z)$ define parts of the drillship 18 that correspond to the features detected in the two-dimensional (or "image") reference frame. The processor 8 takes an average of the first and second feature points in the three-dimensional reference frame to determine a second point $P_{av}(x,y,z)$ that represents an average location of the drillship 18 for position measurement purposes.

Finally, the processor 8 can determine the distance D between the first point $P_0$ (0,0,0), which is the centre of gravity of the platform supply vessel 6, and the second point $P_{av}(x,y,z)$. The relative bearing between the heading of the platform supply vessel 6 to the straight line between the first point $P_0(0,0,0)$ and the second point $P_{av}(x,y,z)$ can also be determined. The processor 8 can process successive paired first and second digital images in the same way to determine successive distance and relative bearing measurements which are provided to the DP system 12. Before determining the distance D between the first and second points, the processor 8 can optionally process the orientation information 11 provided by the DP system 12 relating to the orientation of the platform supply vessel 6. This can be particularly important during anything other than calm sea states where the orientation of the platform supply vessel 6, and hence the orientation of the three-dimensional reference frame, will change significantly as a result of environmental forces.

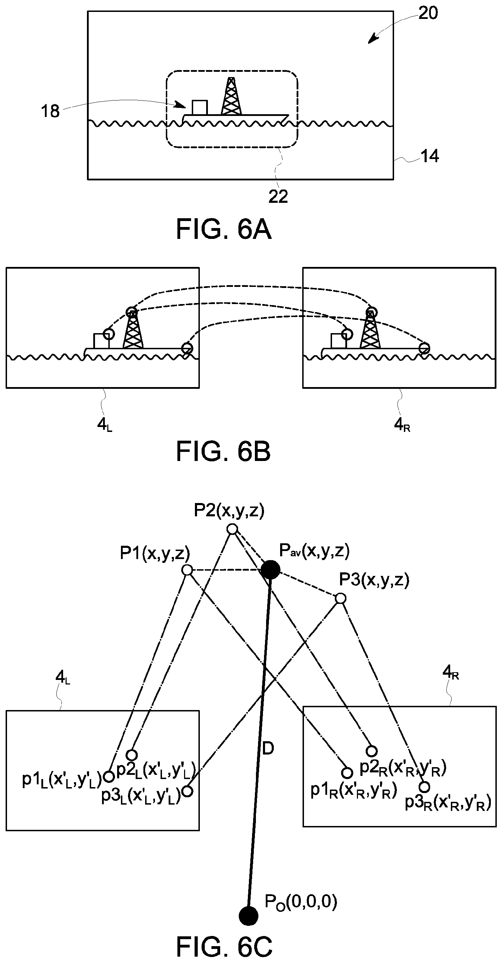

Figures 6A, 6B and 6C represent a second scenario where the platform supply vessel 6 and the drillship 18 are closer than in the first scenario. As the platform supply vessel 6 approaches the drillship 18, the indistinct "blob" in the first and second digital images $4_L$, $4_R$ shown in Figure 5B will gradually resolve into more recognisable parts of the drillship.

The previously selected group of matching pairs of features can be "tracked" through successive paired first and second digital images. A quality factor for the tracking can be determined. If the quality factor falls below a threshold, i.e., if the processor 8 is no longer confident that a previously selected group is being properly tracked for any reason, the user can be prompted by the processor 8 to select one or more highlighted groups from a displayed image or to select (or "crop") one or more parts of the image for subsequent processing by the feature detection and matching algorithm. This selection can be identical in practice to the preliminary preprocessing step described above with reference to Figure 5A. In Figure 6A the user has selected only the part of the image 20 that includes the drillship 18 and the feature detection and matching process is only applied to the corresponding parts of the first and second digital images

$4_L$, $4_R$.

When the paired first and second digital images $4_L$, $4_R$ are processed, the feature detection and matching algorithm will detect a plurality of first features in the first digital image that respectively represent the main bridge and accommodation section at the stern of the drillship 18, the derrick, and the bow, and a plurality of second features in the second digital image that also respectively represent the main bridge and accommodation section, the derrick, and the bow as shown in Figure 6B. In Figure 6C, the first features in the first digital image $4_L$ are identified as $p1_L(x'_L, y'_L)$, $p2_L(x'_L, y'_L)$ and $p3_L(x'_L, y'_L)$ and the second features in the second digital image $4_R$ are identified as $p1_R(x'_R, y'_R)$, $p2_R(x'_R, y'_R)$ and $p3_R(x'_R, y'_R)$. A first matching pair of features comprises $p1_L(x'_L, y'_L)$ and $p1_R(x'_R, y'_R)$, a second matching pair of features comprises $p2_L(x'_L, y'_L)$ and $p2_R(x'_R, y'_R)$ and a third matching pair of features comprises $p3_L(x'_L, y'_L)$ and $p3_R(x'_R, y'_R)$.

The matching pairs of features are grouped into a single group. In this case, the grouping is carried out on the basis that any matching pairs of features detected within the previously selected subset of the first and second digital images $4_L$, $4_R$ are grouped together. So the group includes the features $p1_L(x'_L, y'_L)$, $p2_L(x'_L, y'_L)$, $p3_L(x'_L, y'_L)$, $p1_R(x'_R, y'_R)$, $p2_R(x'_R, y'_R)$ and $p3_R(x'_R, y'_R)$ which together represent the whole of the drillship 18 because it is still quite a distance away from the platform supply vessel 6.

The processor 8 uses the position determining algorithm to determine first, second and third feature points $P1(x,y,z)$, $P2(x,y,z)$ and $P3(x,y,z)$ by applying the three-dimensional reconstruction process. The first, second and third feature points $P1(x,y,z)$, $P2(x,y,z)$ and $P3(x,y,z)$ are located in the three-dimensional (or "real world") reference frame and define the parts of the drillship 18 that correspond to the features detected in the two-dimensional (or "image") reference frame (i.e., the main bridge and accommodation section, derrick, and bow of the drillship). The processor 8 takes an average of the first, second and third feature points in the three-dimensional reference frame to determine a second point $P_{av}(x,y,z)$ that represents an average location of the drillship 18 for position measurement purposes.

Finally, the processor 8 can determine the distance D between the first point $P_0$ (0,0,0), which is the centre of gravity of the platform supply vessel 6, and the second point $P_{av}(x,y,z)$. The relative bearing between the heading of the platform supply vessel 6 to the straight line between the first point $P_0(0,0,0)$ and the second point $P_{av}(x,y,z)$ can also be determined. The processor 8 can process successive paired first and second digital images in the same way to determine successive distance and relative bearing measurements which are provided to the DP system 12.

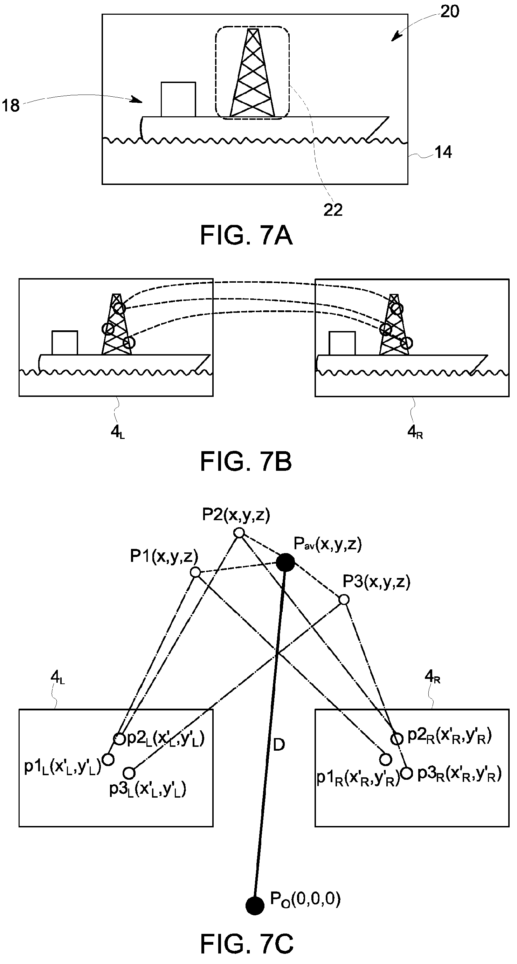

Figures 7A, 7B and 7C represent a third scenario where the platform supply vessel 6 and the drillship 18 are much closer than in the second scenario.

The user is prompted to select (or "crop") one or more parts of the image for subsequent processing by the feature detection and matching algorithm. In Figure 7A the user has selected only the part of the image 20 that includes the derrick of the drillship 18.

When the paired first and second digital images $4_L$, $4_R$ are processed, the feature detection and matching algorithm will detect a plurality of first features in the first digital image that represent the derrick of the drillship 18 and a plurality of second features in the second digital image that also represent the derrick as shown in Figure 7B. In Figure 7C, the first features in the first digital image $4_L$ are identified as $p1_L(x'_L, y'_L)$, $p2_L(x'_L, y'_L)$ and $p3_L(x'_L, y'_L)$ and the second features in the second digital image $4_R$ are identified as $p1_R(x'_R, y'_R)$, $p2_R(x'_R, y'_R)$ and $p3_R(x'_R, y'_R)$. A first matching pair of features comprises $p1_L(x'_L, y'_L)$ and $p1_R(x'_R, y'_R)$, a second matching pair of features comprises $p2_L(x'_L, y'_L)$ and $p2_R(x'_R, y'_R)$ and a third matching pair of features comprises $p3_L(x'_L, y'_L)$ and $p3_R(x'_R, y'_R)$.

The matching pairs of features are grouped into a single group. In this case, the grouping is carried out on the basis that any matching pairs of features detected within the previously-selected subset of the first and second digital images $4_L$, $4_R$ are grouped together. So the group includes the features $p1_L(x'_L, y'_L)$, $p2_L(x'_L, y'_L)$, $p3_L(x'_L, y'_L)$, $p1_R(x'_R, y'_R)$, $p2_R(x'_R, y'_R)$ and $p3_R(x'_R, y'_R)$ which together represent the derrick of the drillship 18. This means that position measurement can be provided with respect to the derrick of the drillship 18 rather than to the drillship as a whole.

The processor 8 uses the position determining algorithm to determine first, second and third feature points $P1(x,y,z)$, $P2(x,y,z)$ and $P3(x,y,z)$ by applying the three-dimensional reconstruction process. The first, second and third feature points $P1(x,y,z)$, $P2(x,y,z)$ and $P3(x,y,z)$ are located in the three-dimensional (or "real world") reference frame and define the part of the drillship 18 that corresponds to the features detected in the two-dimensional (or "image") reference frame (i.e., the derrick). The processor 8 takes an average of the first, second and third features points in the three-dimensional reference frame to determine a second point $P_{av}(x,y,z)$ that represents an average location of the derrick for position measurement purposes.

Finally, the processor 8 can determine the distance D between the first point $P_0(0,0,0)$, which is the centre of gravity of the platform supply vessel 6, and the second point $P_{av}(x,y,z)$. The relative bearing between the heading of the platform supply vessel 6 to the straight line between the first point $P_0(0,0,0)$ and the second point $P_{av}(x,y,z)$ can also be determined. The processor 8 can process successive paired first and second digital images in the same way to determine successive distance and relative bearing measurements which are provided to the DP system 12.

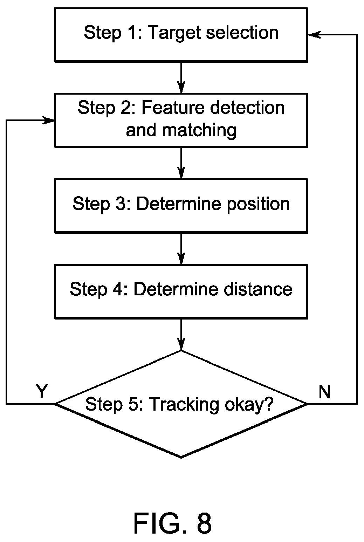

The first, second and third scenarios are summarised in the flow diagram shown in Figure 8.

In step 1, the target object or part of the target object is selected, e.g., by the user using the user-operable controls 16 to select (or "crop") part of the image 20. This can be part of a pre-processing step when the target object or part of the target object is selected for the first time, or in response to a quality factor for the tracking falling below a threshold. In other words, once selected, each group of matching pairs of features can be "tracked" through successive paired first and second digital images. If the quality factor falls below a threshold, i.e., if the processor 8 is no longer confident that a previously selected group is being properly tracked for any reason, the user can be prompted to select one or more highlighted groups from a displayed image or to select (or "crop") one or more parts of the image for subsequent processing by the feature detection and matching algorithm.

In step 2, the feature detection and matching algorithm is applied to the paired first and second digital images. Although not described above, this step may also include applying a grouping algorithm to group the matching pairs of features into one or more groups, each group representing a different target object or a different part of a target object.

In step 3, the position of the second point $P_{av}(x,y,z)$ is determined by the position determining algorithm.

In step 4, the distance between the first point $P_0(0,0,0)$ and the second point $P_{av}(x,y,z)$ is determined and the distance and/or relative bearing measurements can be provided to the DP system 12 of the platform supply vessel 6, for example.

In step 5, the quality of the tracking is determined. If the tracking is acceptable (e.g., the quality factor is above the threshold) the feature detection and matching algorithm is applied to the next paired first and second digital images. If the tracking is not acceptable, the user can be asked to select another target object or another part of the target object.

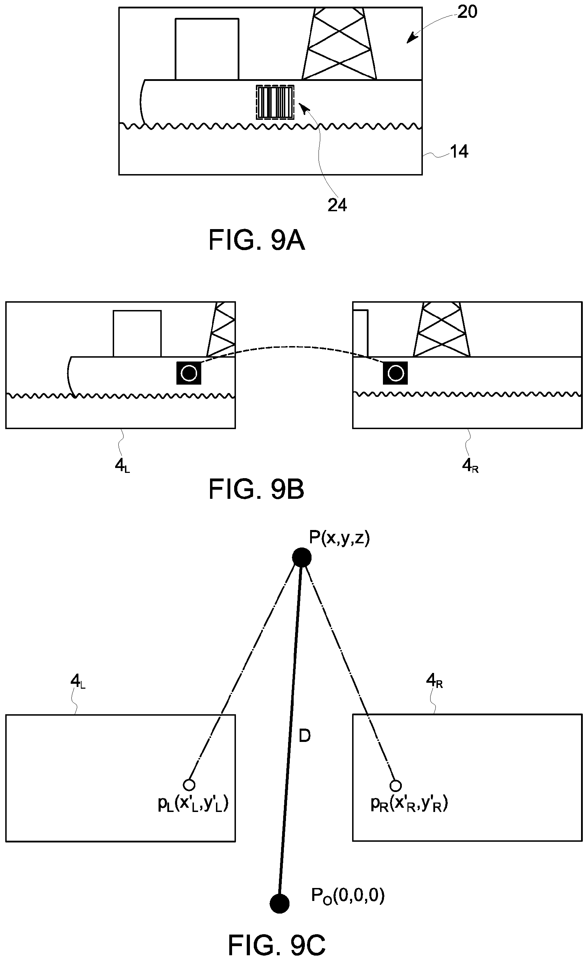

Figures 9A, 9B and 9C represent a fourth scenario where the platform supply vessel 6 and the drillship 18 are very close and a marker 24 (see Figure 9A) is provided on the side of the drillship. The processor 8 will apply a marker detection algorithm to the paired first and second digital images $4_L$, $4_R$. When the paired first and second digital images $4_L$, $4_R$ are processed, the marker detection algorithm will detect the marker 24 (e.g., as a visual pattern within the first and second digital images that corresponds substantially to one or more stored visual patterns that represent different types of marker) and will determine a first feature in the first digital image and a second feature in the second digital image that represents the marker. The first and second features can be the centre of the marker 24 as shown in Figure 9B. But they could also be a corner of the marker.

In Figure 9C, the first feature in the first digital image $4_L$ is identified as $p_L\left(x_L', y_L'\right)$ and the second feature in the second digital image $4_R$ is identified as $p_R\left(x_R', y_R'\right)$. It will be understood that the first and second features in this case are detected by the marker detection algorithm and not by the feature detection and matching algorithm.

The processor 8 uses the position determining algorithm to determine a second point $P(x,y,z)$ that represents the location of the marker 24 in the three-dimensional reference frame for position measurement purposes. In particular, the position determining algorithm uses the first feature $p_L\left(x_L', y_L'\right)$ and the second feature $p_R\left(x_R', y_R'\right)$ to determine the second point $P(x,y,z)$ by applying the three-dimensional reconstruction process.

Finally, the processor 8 can determine the distance D between the first point $P_0(0,0,0)$, which is the centre of gravity of the platform supply vessel 6, and the second point $P(x,y,z)$ that represents the location of the marker 24 on the side of the drillship 18. The relative bearing between the heading of the platform supply vessel 6 to the straight line between the first point $P_0(0,0,0)$ and the second point $P_{av}(x,y,z)$ can also be determined. The processor 8 can process successive paired first and second digital images in the same way to provide successive distance and relative bearing measurements which are provided to the DP system 12. This can allow the DP system 12 to use thrusters to maintain the position of the platform supply vessel 6 in the vicinity of the reference point defined by the marker 24 and stabilise its heading, in opposition to environmental forces such as wind and current.

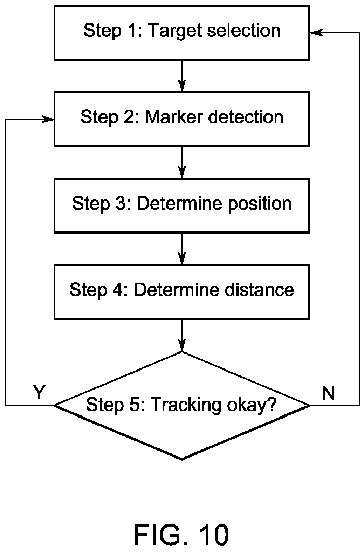

The fourth scenario is summarised in the flow diagram shown in Figure 10.

In step 1, the target object or part of the target object is selected, e.g., by the user using the user-operable controls 16 to select (or "crop") part of the image 20. This can be part of a pre-processing step when the target object or part of the target object is selected for the first time, or in response to a quality factor for the tracking falling below a threshold as described above.

In step 2, the marker detection algorithm is applied to the paired first and second digital images. It should be noted that the marker detection algorithm can be applied simultaneously with the feature detection and matching algorithm in some arrangements. If a marker is detected (e.g., a visual pattern or other visual indicator corresponding to a stored visual pattern is found in the first and second digital images) then it can be automatically selected in preference to any matching pairs of features detected by the feature detection and matching algorithm.

In step 3, the position of the second point $P_{av}(x,y,z)$ is determined by the position determining algorithm using the pair of features corresponding to the detected marker.

In step 4, the distance between the first point $P_0(0,0,0)$ and the second point $P_{av}(x,y,z)$ is determined and the distance and/or relative bearing measurement can be provided to the DP system 12 of the platform supply vessel, for example.

In step 5, the quality of the tracking is determined. If the tracking is acceptable (e.g., the quality factor is above the threshold) the marker detection algorithm is applied to the next paired first and second digital images. If the tracking is not acceptable, the user can be asked to select another target object or another part of the target object.

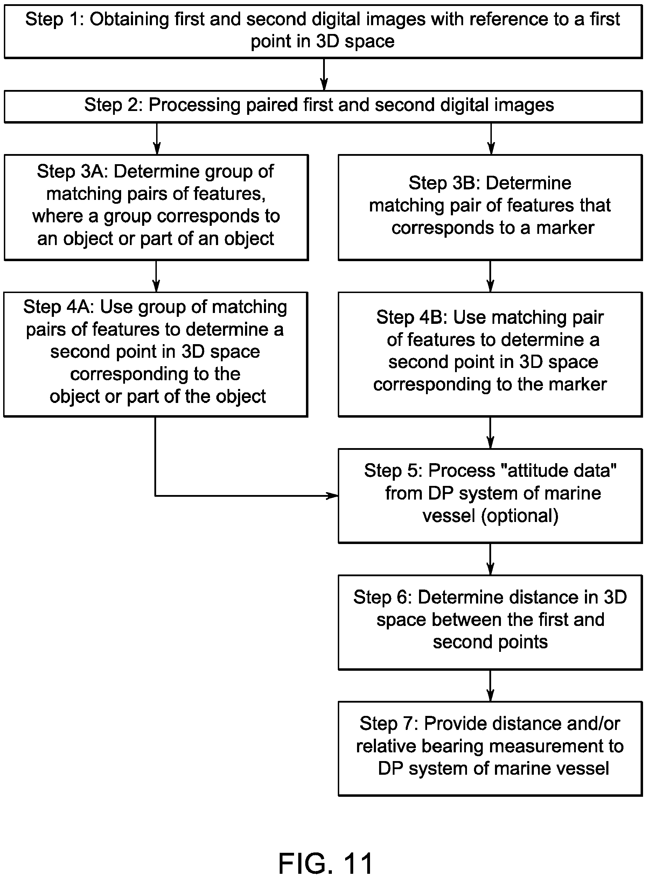

The general method of position measuring is summarised in the flow diagram shown in Figure 11.

In step 1, a sequence of first and second digital images $4_L$, $4_R$ are obtained using first and second optical instruments (e.g., video cameras $2_L$, $2_R$). The first and second optical instruments $2_L$, $2_R$ are positioned at spaced apart locations relative to a first point in three-dimensional space and orientated to have partially overlapping fields of view.

In step 2, paired first and second digital images $4_L$, $4_R$ are processed by the processor 8.

In step 3A, a group of matching pairs of features is determined. Each matching pair of features includes a first feature in the first digital image and a matching second feature in the second digital image. The group represents a target object 18 or part of the target object.

In step 4A, the group of matching pairs of features is used to determine a second point in three-dimensional space corresponding to the target object 18 or the part of the target object. This can be done by determining a feature point in three-dimensional space that corresponds to each of the matching pairs of features using a three-dimensional reconstruction process, and deriving the second point from the feature points.

In step 3B, a marker (e.g., a visual pattern on the target object) is detected in the first and second digital images and a pair of features that represents the marker is determined. The pair of features includes a first feature in the first digital image and a second feature in the second digital image.

In step 4B, the pair of features is used to determine a second point in three-dimensional space corresponding to the marker 24 on the target object 18. The second point is derived from the pair of features using a three-dimensional reconstruction process.

For PME mounted on a marine vessel, in step 5 the orientation information (or "attitude data") 11 supplied by the DP system 12 or other sensors can be used by the processor 8 for pitch and roll correction.

In step 6, the distance in three-dimensional space between the first and second points is determined.

In step 7, for PME mounted on a marine vessel, the distance and/or relative bearing measurements are provided to the DP system 12.

## Claims

1. Position measuring equipment comprising:

 a first optical instrument ($2_L$) for recording a sequence of first digital images ($4_L$);
 a second optical instrument ($2_R$) for recording a sequence of second digital images ($4_R$), wherein the first and second optical instruments ($2_L$, $2_R$) are positioned at spaced apart locations relative to a first point in three-dimensional space ($P_0(0,0,0)$) and orientated to have partially overlapping fields of view; and
 a processor (8) for processing paired first and second digital images ($4_L$, $4_R$) that are recorded by the first and second optical instruments ($2_L$, $2_R$) at substantially the same time;
 wherein the processor (8) is adapted to:

 determine a group of matching pairs of features $(p1_L(x'_L, y'_L), \ p2_L(x'_L, y'_L), p3_L(x'_L, y'_L), \ p1_R(x'_R, y'_R), p2_R(x'_R, y'_R), \ p3_R(x'_R, y'_R))$, each matching pair of features including a first feature $(p1_L(x'_L, y'_L), \ p2_L(x'_L, y'_L), p3_L(x'_L, y'_L))$ in the first digital image ($4_L$) and a matching second feature $(p1_R(x'_R, y'_R), \ p2_R(x'_R, y'_R), p3_R(x'_R, y'_R))$ in the second digital image ($4_R$), wherein the group represents a target object (18) or part of the target object;
 use the group of matching pairs of features $(p1_L(x'_L, y'_L), p2_L(x'_L, y'_L), p3_L(x'_L, y'_L), \ p1_R(x'_R, y'_R), p2_R(x'_R, y'_R), \ p3_R(x'_R, y'_R))$ to determine a second point ($P_{av}(x,y,z)$) in three-dimensional space corresponding to the target object (18) or the part of the target object; and
 determine the distance in three-dimensional space between the first and second points ($P_0(0,0,0)$, $P_{av}(x,y,z)$).

2. Position measuring equipment according to claim 1, wherein the optical instruments are video cameras ($2_L$, $2_R$).

3. Positioning measuring equipment according to claim 1 or claim 2, wherein the processor (8) includes a display (14) and user-operable controls (16).

4. A marine vessel comprising a dynamic positioning system and position measuring equipment according to any preceding claim, wherein the determined distance in three-dimensional space between the first and second points ($P_0(0,0,0)$, $P_{av}(x,y,v)$) is provided to the dynamic positioning system.

5. A method of position measuring comprising the steps of:

 obtaining a sequence of first digital images ($4_L$) using a first optical instrument ($2_L$);
 obtaining a sequence of second digital images ($4_R$) using a second optical instrument ($2_R$), the first and second optical instruments ($2_L$, $2_R$) being positioned at spaced apart locations relative to a first point in three-dimensional space ($P_0(0,0,0)$) and orientated to have partially overlapping fields of view;
 processing paired first and second digital images ($4_L$, $4_R$) that are recorded by the first and second optical instruments ($2_L$, $2_R$) at substantially the same time to:

 determine a group of matching pairs of features $(p1_L(x'_L, y'_L), \ p2_L(x'_L, y'_L), p3_L(x'_L, y'_L), \ p1_R(x'_R, y'_R), p2_R(x'_R, y'_R), \ p3_R(x'_R, y'_R))$, each matching pair of features including a first feature $(p1_L(x'_L, y'_L), \ p2_L(x'_L, y'_L), p3_L(x'_L, y'_L))$ in the first digital image ($4_L$) and a matching second feature $(p1_R(x'_R, y'_R), \ p2_R(x'_R, y'_R), p3_R(x'_R, y'_R))$ in the second digital image ($4_R$), wherein the group represents a target object (18) or part of the target object;
 use the group of matching pairs of features

$(p1_L(x'_L, y'_L), p2_L(x'_L, y'_L),$
$p3_L(x'_L, y'_L) \quad p1_R(x'_R, y'_R),$
$p2_R(x'_R, y'_R), p3_R(x'_R, y'_R))$ to determine a second point $(P_{av}(x,y,z))$ in three-dimensional space corresponding to the target object (18) or the part of the target object; and

determine the distance in three-dimensional space between the first and second points $(P_0(0,0,0), P_{av}(x,y,z))$.

6. A method according to claim 5, wherein the matching pairs of features $(p1_L(x'_L, y'_L), p2_L(x'_L, y'_L), p3_L(x'_L, y'_L), p1_R(x'_R, y'_R), p2_R(x'_R, y'_R), p3_R(x'_R, y'_R))$ are detected and matched using a feature detection and matching algorithm.

7. A method according to claim 6, wherein the paired first and second digital images are pre-processed or smoothed before the feature detection and matching algorithm is applied.

8. A method according to claim 6 or claim 7, wherein the feature detection and matching algorithm is applied only to a subset of the paired first and second digital images ($4_L$, $4_R$), wherein the subset is optionally selected by the processor (8) or by a user.

9. A method according to any of claims 5 to 8, wherein one or more groups of matching pairs of features are selected from a plurality of groups, wherein the selection is optionally carried out by the processor (8) or by a user.

10. A method according to any of claims 5 to 9, wherein the first and second optical instruments ($2_L$, $2_R$) are mounted to a host object that is a moving object (6), and wherein the processor (8) further uses orientation information (11) relating to the rotational movement of the host object about one or more of three perpendicular axes (e.g., pitch, yaw and roll) when determining the distance between the first and second points.

11. A method according to claim 10, wherein the orientation information (11) is provided by a dynamic positioning system (12) or by one or more sensors.

12. A method according to any of claims 5 to 11, wherein the step of using the group of matching pairs of features to determine the second point $(P_0(0,0,0))$ in three-dimensional space includes determining a feature point $(P1(x,y,z), P2(x,y,z), P3(x,y,z))$ in three-dimensional space that corresponds to each of the matching pairs of features $(p1_L(x'_L, y'_L), p2_L(x'_L, y'_L), p3_L(x'_L, y'_L), p1_R(x'_R, y'_R), p2_R(x'_R, y'_R), p3_R(x'_R, y'_R))$, and deriving the second point $(P_0(0,0,0))$ from the feature points $(P1(x,y,z), P2(x,y,z), P3(x,y,z))$.

13. A method according to claim 12, wherein each feature point $(P1(x,y,z), P2(x,y,z), P3(x,y,z))$ in three-dimensional space is determined by a three-dimensional reconstruction process that includes one or more of a projection matrix, a distortion matrix, rotational and translational matrices that describe the position and orientation of the first and second optical instruments ($2_L$, $2_R$) relative to each other, and a fundamental matrix.

14. A method according to any of claim 5 to 13, further comprising the step of processing the paired first and second digital images ($4_L$, $4_R$) to:

detect a marker (24) in the paired first and second images ($4_L$, $4_R$), e.g., using a marker detection algorithm;
determine a pair of features $(p_L(x'_L, y'_L), p_R(x'_R, y'_R))$ that correspond to the detected marker (24), the pair of features including a first feature $(p_L(x'_L, y'_L))$ in the first digital image ($4_L$) and a second feature $(p_R(x'_R, y'_R))$ in the second digital image ($4_R$);
use the pair of features $(p_L(x'_L, y'_L), p_R(x'_R, y'_R))$ to determine a second point $(P(x, y, z))$ in three-dimensional space corresponding to the marker (24); and
determine the distance in three-dimensional space between the first and second points $(P_0(0,0,0), P(x,y,z))$.

15. A method according to claim 14, wherein the second point $(P(x, y, z))$ in three-dimensional space is determined by a three-dimensional reconstruction process that includes one or more of a projection matrix, a distortion matrix, rotational and translational matrices that describe the position and orientation of the first and second optical instruments ($2_L$, $2_R$) relative to each other, and a fundamental matrix.

FIG. 1

FIG. 2

FIG. 3

FIG. 4

FIG. 5A

FIG. 5B

FIG. 5C

FIG. 6A

FIG. 6B

FIG. 6C

**FIG. 7A**

**FIG. 7B**

**FIG. 7C**

Step 1: Target selection

Step 2: Feature detection
and matching

Step 3: Determine position

Step 4: Determine distance

Y    Step 5: Tracking okay?    N

FIG. 8

20

14

24

FIG. 9A

$4_L$

$4_R$

FIG. 9B

P(x,y,z)

$4_L$

$4_R$

D

$p_L(x'_L,y'_L)$

$p_R(x'_R,y'_R)$

$P_O(0,0,0)$

FIG. 9C

```
┌─────────────────────────────────┐
│   Step 1: Target selection      │◄─────┐
└─────────────────────────────────┘      │
                 │                        │
                 ▼                        │
┌─────────────────────────────────┐      │
│   Step 2: Marker detection      │◄──┐   │
└─────────────────────────────────┘   │   │
                 │                     │   │
                 ▼                     │   │
┌─────────────────────────────────┐   │   │
│   Step 3: Determine position    │   │   │
└─────────────────────────────────┘   │   │
                 │                     │   │
                 ▼                     │   │
┌─────────────────────────────────┐   │   │
│   Step 4: Determine distance    │   │   │
└─────────────────────────────────┘   │   │
                 │                     │   │
                 ▼                     │   │
      Y      ◇─────────────◇      N    │   │
      ┌──────◇ Step 5:     ◇───────────┘   │
      │      ◇ Tracking okay?◇             │
      └──────◇─────────────◇──────────────┘
```

FIG. 10

Step 1: Obtaining first and second digital images with reference to a first point in 3D space

Step 2: Processing paired first and second digital images

Step 3A: Determine group of matching pairs of features, where a group corresponds to an object or part of an object

Step 3B: Determine matching pair of features that corresponds to a marker

Step 4A: Use group of matching pairs of features to determine a second point in 3D space corresponding to the object or part of the object

Step 4B: Use matching pair of features to determine a second point in 3D space corresponding to the marker

Step 5: Process "attitude data" from DP system of marine vessel (optional)

Step 6: Determine distance in 3D space between the first and second points

Step 7: Provide distance and/or relative bearing measurement to DP system of marine vessel

FIG. 11

**European Patent Office**
Europäisches Patentamt
European Patent Office
Office européen des brevets

# EUROPEAN SEARCH REPORT

Application Number

EP 16 16 7198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIANDI DUAN ET AL: "Detecting the Presence of Stationary Objects from Sparse Stereo Disparity Space", 2010 FOURTH PACIFIC-RIM SYMPOSIUM ON IMAGE AND VIDEO TECHNOLOGY (PSIVT 2010) : SINGAPORE, 14 - 17 NOVEMBER 2010, IEEE, PISCATAWAY, NJ, USA, 14 November 2010 (2010-11-14), pages 15-20, XP031839210, ISBN: 978-1-4244-8890-2 | 1-3,5-13 | INV. G06T7/00 |
| Y | * page 15, right-hand column, lines 1-27 * * sections III. and IV.; figures 5,6,7 * | 4 | |
| Y | OGURA TADASHI ET AL: "Distance measurement system using stereo camera for automatic ship control", 2013 13TH INTERNATIONAL CONFERENCE ON CONTROL, AUTOMATION AND SYSTEMS (ICCAS 2013), IEEE, 20 October 2013 (2013-10-20), pages 1020-1024, XP032540229, ISSN: 2093-7121, DOI: 10.1109/ICCAS.2013.6704066 [retrieved on 2014-01-03] * abstract; figures 1,2 * * sections 1, 2.1, 2.2, 2.5 * | 4 | |
| A | US 2014/172296 A1 (SHTUKATER ALEKSANDR [US]) 19 June 2014 (2014-06-19) * paragraphs [0069], [0106] - [0009], [0117] * * abstract * | 1-13 | TECHNICAL FIELDS SEARCHED (IPC) G06T |
| A | US 2015/142227 A1 (STEPHENS RICHARD IAN [GB]) 21 May 2015 (2015-05-21) * abstract; figures 1-4 * | 1-13 | |

~~The present search report has been drawn up for all claims~~

| Place of search | Date of completion of the search | Examiner |
|---|---|---|
| Munich | 20 October 2016 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

Europäisches
Patentamt

European
Patent Office

Office européen
des brevets

Application Number

EP 16 16 7198

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-13

☐ The present supplementary European search report has been drawn up for those parts of the European patent application which relate to the invention first mentioned in the claims (Rule 164 (1) EPC).

**LACK OF UNITY OF INVENTION
SHEET B**

Application Number

EP 16 16 7198

The Search Division considers that the present European patent application does not comply with the requirements of unity of invention and relates to several inventions or groups of inventions, namely:

    1. claims: 1-13

        Determining a group of matching pairs of features and using the group to determine a "second point". The problem solved by these features is to identify said "second point" in situations where prior knowledge about an object to which the distance should be measured is not available.
        ---

    2. claims: 14, 15

        Detecting a marker in the paired first and second images using a marker detection algorithm, using the marker to determine a pair of features and using the pair of features to determine a "second point". The problem solved by these features is to identify said "second point" in situations where an object to which the distance should be measured is known to comprise a specific marker.
        ---

## ANNEX TO THE EUROPEAN SEARCH REPORT
## ON EUROPEAN PATENT APPLICATION NO.

EP 16 16 7198

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2016

| Patent document cited in search report | Publication date | Patent family member(s) | Publication date |
|---|---|---|---|
| US 2014172296 A1 | 19-06-2014 | NONE | |
| US 2015142227 A1 | 21-05-2015 | NONE | |

For more details about this annex : see Official Journal of the European Patent Office, No. 12/82